# EUROPEAN PATENT APPLICATION

(11) **EP 2 071 877 A1**
(43) Date of publication of application: **17.06.2009**
(21) Application number: 07150030.0
(22) Date of filing: 14.12.2007
(51) Int. Cl.: H04W 4/00

(54) **Establishing communication between a host terminal and a wireless device**

(71) Applicant: TietoEnator Oyj, 02631 Espoo (FI)
(72) Inventor: Niinistö, Janne, FI-20540, Turku (FI); Kankaanpää, Arto, FI-20780, Kaarina (FI); Rosendahl, Jens, FI-20540, Turku (FI)
(74) Representative: Simmelvuo, Markku Kalevi

(57) **Abstract**

The invention discloses a method for connecting a wireless device and a host terminal by using a first mode employing a first radio frequency technique. The method further comprises: switching the direct connection between the wireless device and the host terminal from the first mode employing the first radio frequency technique to a second mode employing a second radio frequency technique for a transmission requiring transmission characteristics that the first mode does not provide.

## Description

### FIELD OF THE INVENTION

The invention relates to radio frequency devices. More particularly, the invention relates to establishing a radio frequency connection between two devices.

### BACKGROUND OF THE INVENTION

The power efficiency of a radio frequency protocol depends on its design. For example, some protocols are designed for high data rates and they use more power than a radio frequency protocol which is designed for low data rates.

Many current hands-free devices (e.g. hands-free ear plugs) use Bluetooth technology for communicating with a mobile phone. The hands-free devices are equipped with a battery for operating power and the size of the battery determines the capacity of the battery (i.e. operation time of the hands-free device).

An ideal hands-free device would be lightweight, would have long operation time and at the same time would be cheap to manufacture. Satisfying all the above-mentioned requirements seems impossible. Therefore a device manufacturer has to establish a compromise between the above-mentioned characteristics. In practice this leads to an end product that has an operation time sufficient for most people, the size of the device is small enough and the manufacturing cost is satisfactory.

It is, however, evident that there is a continuing need e.g. for a more power efficient solution for the current Bluetooth hands-free devices. Although Bluetooth has been disclosed as an example technique above, the same need can also be seen with other radio frequency techniques. Better power efficiency means greater user experience via longer operating time and smaller device size. An obvious solution would be to create a new dedicated solution that would be more power efficient than the previous ones. Since this is a very time consuming alternative and at the end may not prove to be a commercially feasible solution, it would be more preferable to find a solution to the above-mentioned need by using the already existing techniques.

Another problem is that some transmission techniques are better suited than others for one or more purpose. At the same time, these techniques may also have some downsides. This makes it difficult to determine, which technique to use.

### SUMMARY OF THE INVENTION

According to one aspect of the invention, there is provided a method for communication between a wireless device and a host terminal. In the method, the wireless device and the host terminal are connected by using a first mode employing a first radio frequency technique. The method further comprises: switching the direct connection between the wireless device and the host terminal from the first mode employing the first radio frequency technique to a second mode employing a second radio frequency technique for a transmission requiring transmission characteristics that the first mode does not provide.

In one embodiment of the invention, the method further comprises: switching the connection between the wireless device and the host terminal back to the first mode, when the transmission has terminated.

In one embodiment of the invention, the method further comprises: switching the connection between the wireless device and the host terminal back to the first mode, when other characteristics are required that the second mode does not provide.

In one embodiment of the invention, the method further comprises: sending, with the host terminal, a connection switching request to the wireless device before switching the connection from the first mode to the second mode; and sending, with the host terminal, a close connection request to the wireless device to close the second mode connection before switching the connection between the wireless device and the host terminal back to the first mode.

In one embodiment of the invention, the method further comprises before switching the connection from the first mode to the second mode: receiving, with the host terminal, an incoming voice call request from a network; and sending, in response to the incoming voice call request with the host terminal, the connection switching request to the wireless device to switch to the second mode.

In one embodiment of the invention, the method further comprises before switching the connection from the first mode to the second mode: initiating an outgoing voice call with the host terminal; and sending, with the host terminal, the connection switching request to the wireless device.

In one embodiment of the invention, the method further comprises: switching of the connection between the wireless device and the host terminal from the first mode to the second mode when the transmission range of the first mode is not sufficient.

According to another aspect of the invention, there is provided an apparatus comprising a first radio frequency transceiver configured to communicate in accordance with a first mode in a wireless manner and a second radio frequency transceiver configured to communicate in accordance with a second mode in a wireless manner. The apparatus further comprises a controller configured to switch a direct connection established with another apparatus from the first mode employing a first radio frequency technique to a second mode employing a second radio frequency technique for a transmission requiring transmission characteristics that the first mode does not provide.

In one embodiment of the invention, the controller is configured to switch the connection between a wireless device and a host terminal back to the first mode, when the transmission has terminated.

In one embodiment of the invention, the controller is configured to switch the connection between a wireless device and a host terminal back to the first mode, when other characteristics are required that the second mode does not provide.

In one embodiment of the invention, the controller is configured to send a connection switching request to a wireless device before switching the connection from the first mode to the second mode; and to send a close connection request to the wireless device to close the second mode connection before switching the connection back to the first mode, when the transmission has been terminated.

In one embodiment of the invention, before switching the connection from the first mode to the second mode the apparatus is configured to detect an incoming voice call request from a network; and the controller is configured to send, in response to the incoming voice call request, the connection switching request to the wireless device.

In one embodiment of the invention, before switching the connection from the first mode to the second mode the apparatus is configured to initiate an outgoing voice call; and the controller is configured to send the connection switching request to the wireless device.

In one embodiment of the invention, the controller is configured to receive a connection switching request from a host terminal before switching the connection from the first mode to the second mode; and to receive a close connection request from the host terminal to close the second mode connection before switching the connection back to the first mode, when the transmission has been terminated.

In one embodiment of the invention, the controller is configured to switch the connection between the wireless device and the host terminal from the first mode to the second mode when the transmission range of the first mode is not sufficient.

In one embodiment of the invention, the first mode communication comprises communication in accordance with ultra low power Bluetooth radio technology and the second mode communication comprises communication in accordance with Bluetooth radio technology.

In one embodiment of the invention, the first mode communication comprises communication in accordance with a low power radio technology and the second mode communication comprises communication in accordance with a wireless local area network technology.

In one embodiment of the invention, the apparatus comprises a handsfree device. In another embodiment, the apparatus comprises a mobile device. In another embodiment, the apparatus comprises a computer.

Advantages of the present invention relates e.g. to improved power usage efficiency. Furthermore, the present invention provides a solution in which a better suited direct connection between two apparatuses is used based on at least one transmission characteristic.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Figure 1A** discloses a sequence diagram for implementing a connection switching between a host terminal and a wireless device according to one embodiment of the invention;
**Figure 1B** discloses a sequence diagram for implementing a connection switching between a host terminal and a wireless device according to another embodiment of the invention;
**Figure 2A** is a sequence diagram for implementing a connection switching between a host terminal and a wireless device according to another embodiment of the invention;
**Figure 2B** is a sequence diagram for implementing a connection switching between a host terminal and a wireless device according to another embodiment of the invention;
**Figure 3** is a a sequence diagram for implementing a connection switching between a host terminal and a wireless device according to another embodiment of the invention;
**Figure 4A** is a block diagram illustrating a general structure of a host terminal according to one embodiment of the invention; and
**Figure 4B** is a block diagram illustrating a general structure of a wireless device according to one embodiment of the invention.

### DETAILED DESCRIPTION OF THE INVENTION

Reference will now be made in detail to the embodiments of the present invention, examples of which are illustrated in the accompanying drawings.

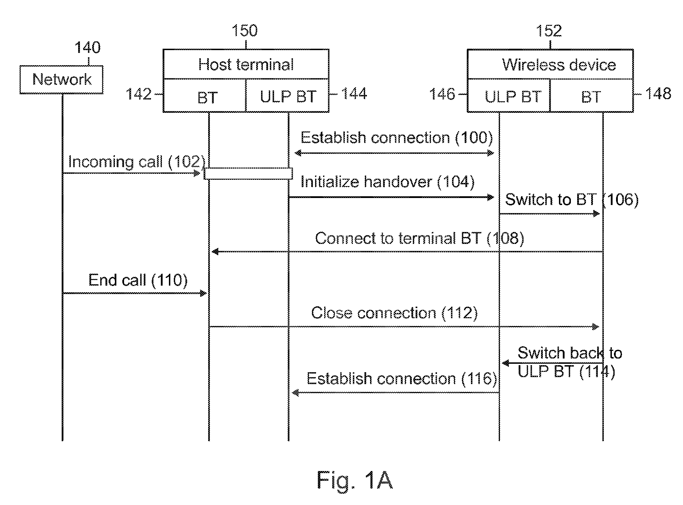

Figure 1A illustrates an embodiment comprising a low power radio frequency (LPRF) host terminal 150 and a wireless LPRF device 152. In this embodiment, the host terminal 150 is a mobile phone and the LPRF device in a hands-free device for the mobile phone. Both the host terminal 150 and the LPRF device 152 comprise a radio transceiver for two different LPRF techniques. In this embodiment, the two transceivers comprise a Bluetooth transceiver 142 and an Ultra Low Power Bluetooth (ULP BT) transceiver 144 in the host terminal 150 and a Bluetooth transceiver 148 and a ULP BT transceiver 146 in the LPRF device 152. In a preferred embodiment, the transceivers in the host terminal 150 and the LPRF device 152 are implemented with a single dual-mode chip. In one embodiment, the dual-mode implementation is achieved by sharing one physical radio and antenna. In other embodiments, the transceivers in a single device may be separate ones. In that case, each transceiver then requires a dedicated antenna.

The host terminal 150 and the LPRF device 152 establish a connection (100) by using the ULP BT mode of the dual-mode chip. Since ULP BT is more power efficient than Bluetooth, it is more advantageous to connect the two devices with a ULP BT connection as a default connection. The ULP BT solution, however, does not at the moment support a voice transmission profile, i.e. a hands-free profile. This means that e.g. a hands-free device for mobile phones cannot use ULP BT technology during a phone call. Instead, e.g. the Bluetooth technique supporting the hands-free profile must be used.

The following illustrates an implementation in which Bluetooth connection is used only for the duration of a voice call.

In this embodiment, the host terminal 150 receives an incoming call (102) from a network 140. At the time of the incoming call request, the connection between the host terminal 150 and the LPRF device 152 has been established with a connection using the ULP BT. Since ULP BT does not support a hands-free profile, the host terminal 150 initializes a handover (connection switching) by sending initialize handover (104) request to the ULP BT part 146 of the LPRF device 152. The LPRF device 152 executes an internal switchover (106) to the Bluetooth part 148, and the Bluetooth part 148 establishes a connection (108) with the Bluetooth part 142 of the host terminal 150. After establishing the Bluetooth connection call related data is transferred using the established Bluetooth connection.

At some point the established call is terminated. The call ending request (110) comes e.g. from the network 140. In response to the call ending, the host terminal 150 initiates a termination of the Bluetooth connection by sending a close connection request (112) to the Bluetooth part 148 of the LPRF device 152. In response to the request, the LPRF device 152 switches back (114) to the ULP BT part 146 and reestablishes (116) the connection with the ULP BT part 144 of the host terminal.

As a summary, a connection between the host terminal 150 and the LPRF device 152 is switched from ULP BT to Bluetooth for the duration of a call. Since ULP BT is much more power efficient than Bluetooth during periods of low data rate, like the polling occuring in stand-by mode, significant power saving advantages are achieved by the handover procedure.

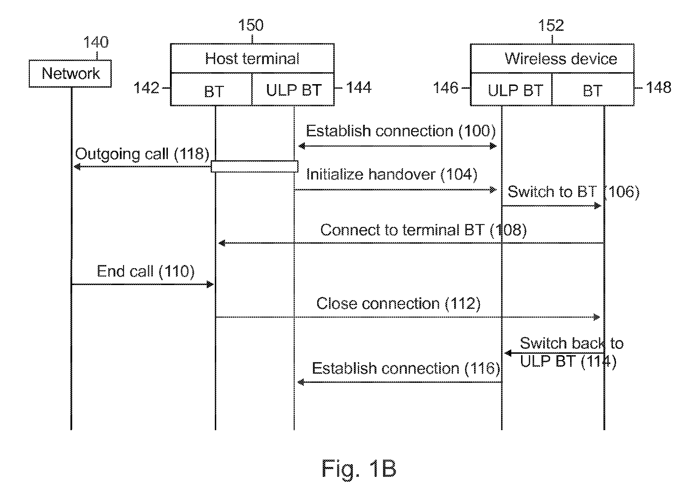

Figure 1B illustrates another embodiment comprising a low power radio frequency (LPRF) host terminal 150 and a wireless LPRF device 152. The only different between Figures 1A and 1B is that in Figure 1B it is the host terminal 150 that initiates the call (118) instead of an incoming call from the network 140. The remaining part of the implementation is the same as in Figure 1A, and therefore, the description is not repeated here.

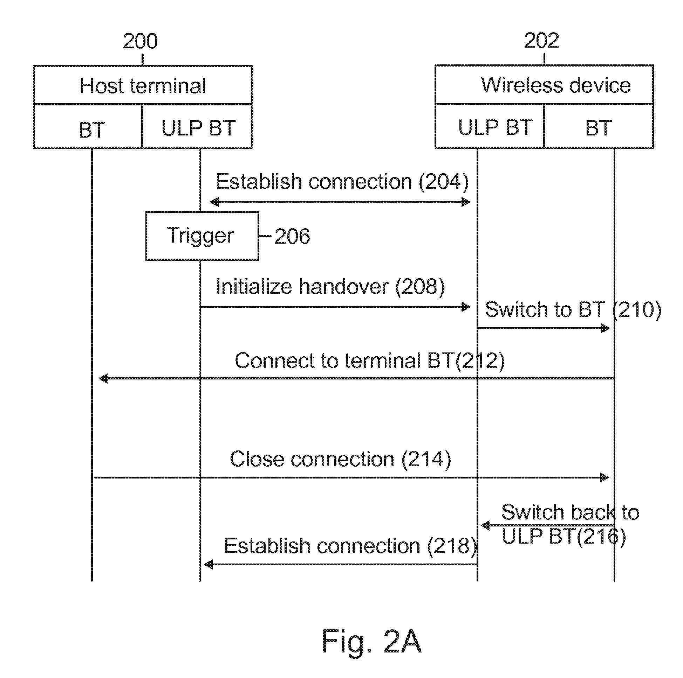

Figure 2A is a sequence diagram for implementing a connection switching between a host terminal and a wireless device according to another embodiment of the invention. Figure 2A illustrates an embodiment comprising a host terminal 200 and a wireless device 202. In this embodiment, the host terminal 200 is a computer and the wireless device 202 comprises a wireless headset. Both the host terminal 200 and the wireless device 202 comprise a radio transceiver for two different LPRF techniques. In this embodiment, the two transceivers comprise a Bluetooth transceiver and an Ultra Low Power Bluetooth (ULP BT) transceiver in the host terminal 200 and a Bluetooth transceiver and a ULP BT transceiver in the wireless device 202. In a preferred embodiment, the transceivers in the host terminal 200 and the wireless device 202 are equipped with a single dual-mode chip. In one embodiment, the dual-mode implementation is achieved by sharing one physical radio and antenna. In other embodiments, the transceivers in a single device may be separate ones. In that case, each transceiver then may require dedicated antennae.

The host terminal 200 and the wireless device 202 establish a connection (204) by using the ULP BT mode of the dual-mode chip. Since ULP BT is more power efficient than Bluetooth, it is more advantageous to connect the two devices with a ULP BT connection as a default connection. The connection 204 may refer to a standby mode, during which only little data (only e.g. polling information) is sent between the devices. The ULP BT solution, however, does not at the moment support a voice data profile. This means that the host terminal 200 cannot use the ULP BT part for voice data between the devices.

At some point, a trigger 206 or trigger event is received. The trigger 206 refers to any event, any parameter limit value etc. that initiates the switching of connection. The trigger 206 initiates a handover (connection switching) from the ULP BT connection to a BT connection between the devices. The host terminal 200 initializes a handover by sending an initialize handover (208) request to the wireless device 202. The wireless device 202 executes an internal switchover (210) to Bluetooth, and a Bluetooth connection (212) is established between the devices. After establishing the Bluetooth connection voice data is transferred using the established Bluetooth connection.

At some point the transmission of voice data is terminated. The host terminal 200 initiates a termination of the Bluetooth connection by sending a close connection request (214) to the wireless device 202. In response to the request, the wireless device 202 switches back to the ULP BT (216) and reestablishes (218) the ULP BT connection with the host terminal 200.

In the above description of Figure 2A, the transmission techniques of the devices comprised Bluetooth and ULP BT. In another embodiment of the invention, either or both of them can be replaced with other techniques. A common essential feature, however, is that one of the techniques is more power efficient than the other but at the same time the former has some limitations, e.g. in the data transmission rate etc. Another embodiment of Figure 2A could include WLAN and ULP BT as transmisson techniques. During the times when there is no WLAN transmission (e.g. standby time) between the devices, the devices establish a ULP BT connection, and thus save a considerable amount of energy. Then, when a WLAN connection is again needed, it is re-established. Furthermore, in other embodiments of the invention another feature (e.g. higher data speed, transmission range etc.) other than the power efficiency is more preferred in one of the devices. Therefore, the switching of the connection may be executed in either direction depending of the devices types used. Thus, the invention is not restricted only to embodiments disclosed in Figures 1A, 1B and 2A.

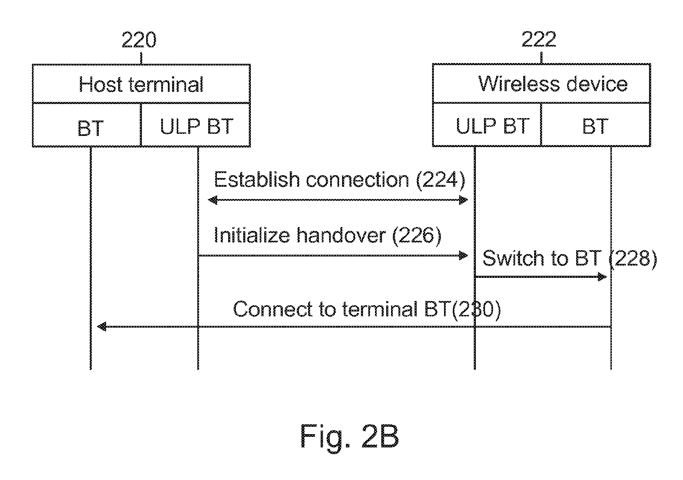

Figure 2B illustrates a sequence diagram for implementing a connection switching between a host terminal and a wireless device according to another embodiment of the invention. The arrangement comprises a host terminal 220 and a wireless device 222. In this embodiment, the host terminal 220 is e.g. a mobile pohone and the wireless device 222 is e.g. a wireless handsfree device (e.g. an earpiece for the mobile phone). Both the mobile phone 220 and the handsfree device 222 comprise a radio transceiver for two different low power radio frequency (LPRF) techniques. In this embodiment, the two transceivers comprise a Bluetooth transceiver and an Ultra Low Power Bluetooth (ULP BT) transceiver in the mobile phone 220 and a Bluetooth transceiver and a ULP BT transceiver in the handsfree device 222. In a preferred embodiment, the transceivers in the mobile phone 220 and the handsfree device 222 are equipped with a single dual-mode chip. In one embodiment, the dual-mode implementation is achieved by sharing one physical radio and antenna. In other embodiments, the transceivers in a single device may be separate ones. In that case, each transceiver then may require dedicated antennae.

The mobile phone 220 and the handsfree device 222 establish a connection (224) by using the ULP BT. Since ULP BT is more power efficient than Bluetooth, it is more advantageous to connect the two devices with a ULP BT connection as a default connection. The connection (224) may refer to a standby mode, during which only little data (only e.g. polling information) is sent between the devices. The ULP BT solution, however, does not at the moment support a voice data profile. This means that the mobile terminal 220 cannot use the ULP BT part for voice data between the devices.

Therefore, when a voice data connection is needed between the devices, the mobile phone 220 initializes the switching (226) of the established connection. The handsfree device 222 executes an internal switchover (228) to Bluetooth, and a Bluetooth connection (230) is established between the devices.

The switching of the connection may be initialized by some kind of trigger or trigger event. The trigger 206 refers to any event, any parameter limit value etc. that initiates the switching of connection. The trigger may be an internal trigger of the mobile phone 220 or it can be based on outside information received by the mobile phone 220.

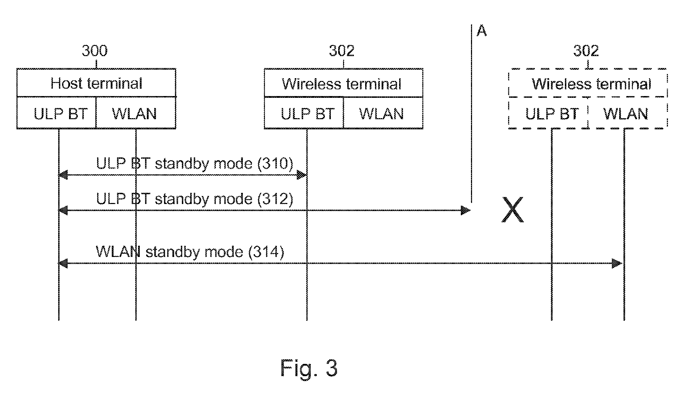

Figure 3 discloses a flow diagram that illustrates a connection between a host terminal 300 and a wireless device 302 according to another embodiment of the invention. As discussed earlier in the discussion of Figures 1A, 1B and 2A, a standby mode (310) between the host terminal 300 and the wireless device 302 is implemented by using a more power efficient technique (ULP BT in the embodiment of Figure 3). The low power connection between the devices is maintained e.g. by polling the connection regularly.

When the distance between the host terminal 300 and the wireless device 302 reaches a predetemined point (A), the transmission range of the ULP BT has reached its maximum distance. Therefore, the polling of the established connection fails (312). In response to the failure, the devices re-establish (314) the connection using the second transceiver in the devices (in this case the WLAN transceiver).

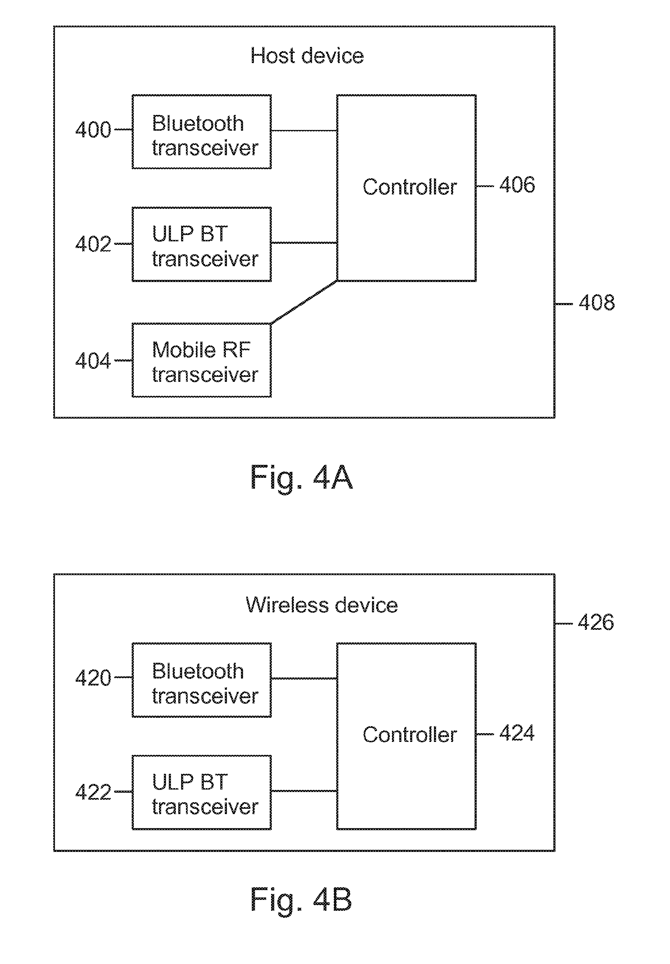

Figure 4A is a block diagram illustrating a general structure of a host terminal 408 according to one embodiment of the invention. The host terminal 408 comprises a controller 406, which is connected to two RF transceivers: a Bluetooth transceiver 400 and an Ultra Low Power (ULP) BT transceiver 402. The transceivers 400, 402 may be implemented with a single dual-mode chip. The dual-mode implementation is achieved by sharing one physical radio and antenna. In another embodiment, the radio transceivers are separate transceivers, and therefore, both of them may need a separate antenna.

In this embodiment, the host terminal 408 is a mobile phone. Therefore, it also comprises an RF transceiver 404 configured to connect to a mobile communication network. Operation power for the operation of the host terminal 408 is acquired e.g. from a rechargeable battery. It is evident that in other embodiments of the invention, the host terminal 408 may not at all comprise a mobile RF transceiver 404. Furthermore, the host terminal 408 may take any appropriate form, depending on the embodiment, e.g. a computer, a mobile device, a WLAN base station, a Personal Digital Assistant (PDA) etc.

Figure 4B is a block diagram illustrating a general structure of a wireless device 426 according to one embodiment of the invention. The wireless device 426 comprises a controller 424, which is connected to two RF transceivers: a Bluetooth transceiver 420 and an Ultra Low Power (ULP) BT transceiver 422. The transceivers 420, 422 may be implemented with a single dual-mode chip. The dual-mode implementation is achieved by sharing one physical radio and antenna. In another embodiment, the radio transceivers are separate transceiver, and therefore, both of them may need a separate antenna. In this embodiment, the wireless device 426 is a hands-free device for mobile phones. Operation power for the operation of the wireless terminal 426 is acquired e.g. from a rechargeable battery. The wireless device 426 may take any appropriate form, depending on the embodiment, e.g. a mobile device, a hands-free device, earphones, a microphone etc.

In the above embodiments, the invention has been illustrated by using ULP BT, WLAN and Bluetooth implementations, mobile phones and hands-free devices as examples. A man skilled in the art understands that also alternative implementations may exist. A man skilled in the art also appreciates that ULP BT and Bluetooth are only examples of possible techniques with which the invention is applicable.

It is to be understood that the exemplary embodiments are for exemplary purposes, as many variations of the specific hardware used to implement the exemplary embodiments are possible, as will be appreciated by those skilled in the hardware and/or software art(s). For example, the functionality of one or more of the components of the exemplary embodiments can be implemented via one or more hardware and/or software devices.

The exemplary embodiments can store information relating to various processes described herein. This information can be stored in one or more memories, such as a hard disk, optical disk, magnetooptical disk, RAM, and the like. One or more databases can store the information used to implement the exemplary embodiments of the present inventions. The databases can be organized using data structures (e.g., records, tables, arrays, fields, graphs, trees, lists, and the like) included in one or more memories or storage devices listed herein. The processes described with respect to the exemplary embodiments can include appropriate data structures for storing data collected and/or generated by the processes of the devices and subsystems of the exemplary embodiments in one or more databases.

All or a portion of the exemplary embodiments can be conveniently implemented using one or more general purpose processors, microprocessors, digital signal processors, micro-controllers, and the like, programmed according to the teachings of the exemplary embodiments of the present inventions, as will be appreciated by those skilled in the computer and/or software art(s). Appropriate software can be readily prepared by programmers of ordinary skill based on the teachings of the exemplary embodiments, as will be appreciated by those skilled in the software art. In addition, the exemplary embodiments can be implemented by the preparation of Field-programmable Gate Array (FPGA), Application-specific Integrated Circuit (ASIC), digital logic or by interconnecting an appropriate network of conventional component circuits etc., as will be appreciated by those skilled in the electrical art(s). Thus, the exemplary embodiments are not limited to any specific combination of hardware and/or software.

Stored on any one or on a combination of computer readable media, the exemplary embodiments of the present inventions can include software for controlling the components of the exemplary embodiments, for driving the components of the exemplary embodiments, for enabling the components of the exemplary embodiments to interact with a human user, and the like. Such software can include, but is not limited to, device drivers, firmware, operating systems, development tools, applications software, and the like. Such computer readable media further can include the computer program product of an embodiment of the present inventions for performing all or a portion (if processing is distributed) of the processing performed in implementing the inventions. Computer code devices of the exemplary embodiments of the present inventions can include any suitable interpretable or executable code mechanism, including but not limited to scripts, interpretable programs, dynamic link libraries (DLLs), Java classes and applets, complete executable programs, Common Object Request Broker Architecture (CORBA) objects, and the like. Moreover, parts of the processing of the exemplary embodiments of the present inventions can be distributed for better performance, reliability, cost, and the like.

While the present inventions have been described in connection with a number of exemplary embodiments, and implementations, the present inventions are not so limited, but rather cover various modifications, and equivalent arrangements, which fall within the purview of prospective claims.

## Claims

1. A method for communication between a wireless device and a host terminal, the method comprising:
connecting the wireless device and the host terminal by using a first mode employing a low power radio frequency technique;
**characterised in that** the method further comprises:
switching the direct connection between the wireless device and the host terminal from the first mode employing the first radio frequency technique to a second mode employing a second radio frequency technique for a transmission requiring transmission characteristics that the first mode does not provide.

2. The method according to claim 1, further comprising:
switching the connection between the wireless device and the host terminal back to the first mode, when the transmission has terminated.

3. The method according to claim 1, further comprising:
switching the connection between the wireless device and the host terminal back to the first mode, when other characteristics are required that the second mode does not provide.

4. The method according to any of claims 1 - 3, further comprising:
sending, with the host terminal, a connection switching request to the wireless device before switching the connection from the first mode to the second mode;
sending, with the host terminal, a close connection request to the wireless device to close the second mode connection before switching the connection between the wireless device and the host terminal back to the first mode.

5. The method according to claim 4, wherein the method further comprises before switching the connection from the first mode to the second mode:
receiving, with the host terminal, an incoming voice call request from a network; and
sending, in response to the incoming voice call request with the host terminal, the connection switching request to the wireless device to switch to the second mode.

6. The method according to claim 4, wherein the method further comprises before switching the connection from the first mode to the second mode:
initiating an outgoing voice call with the host terminal; and
sending, with the host terminal, the connection switching request to the wireless device.

7. The method according to any of claims 1 - 6, wherein switching the connection between the wireless device and the host terminal from the first mode to the second mode when the transmission range of the first mode is not sufficient.

8. The method according to any of claims 1 - 7, wherein the first mode communication comprises communication in accordance with ultra low power Bluetooth radio technology and the second mode communication comprises communication in accordance with the Bluetooth radio technology.

9. The method according to any of claims 1 - 7, wherein the first mode communication comprises communication in accordance with a low power radio technology and the second mode communication comprises communication in accordance with wireless local area network communication.

10. An apparatus comprising:
a first radio frequency transceiver (402, 422) configured to communicate in accordance with a first mode in a wireless manner;
a second radio frequency transceiver (400, 420) configured to communicate in accordance with a second mode in a wireless manner;
**characterised in that** the apparatus further comprises:
a controller (406, 424) configured to switch a direct connection established with another apparatus (408, 426) from the first mode employing a first radio frequency technique to a second mode employing a second radio frequency technique for a transmission requiring transmission characteristics that the first mode does not provide.

11. The apparatus according to claim 10, wherein the controller (406, 424) is configured to:
switch the connection between a wireless device (426) and a host terminal (408) back to the first mode, when the transmission has terminated.

12. The apparatus according to claim 10, wherein the controller (406, 424) is configured to:
switch the connection between a wireless device (426) and a host terminal (408) back to the first mode, when other characteristics are required that the second mode does not provide.

13. The apparatus according to any of claims 10 - 12, wherein the controller (406) is configured to:
send a connection switching request to a wireless device (426) before switching the connection from the first mode to the second mode; and
send a close connection request to the wireless device (426) to close the second mode connection before switching the connection back to the first mode, when the transmission has been terminated.

14. The apparatus according to claim 13, wherein before switching the connection from the first mode to the second mode the apparatus (408) is configured to detect an incoming voice call request from a network (140); and the controller (406) is configured to send, in response to the incoming voice call request, the connection switching request to the wireless device (426).

15. The apparatus according to claim 13, wherein before switching the connection from the first mode to the second mode the apparatus (408) is configured to initiate an outgoing voice call; and the controller (406) is configured to send the connection switching request to the wireless device (426).

16. The apparatus according to any of claims 10 - 12, wherein the controller (424) is configured to:
receive a connection switching request from a host terminal (408) before switching the connection from the first mode to the second mode; and
receive a close connection request from the host terminal (408) to close the second mode connection before switching the connection back to the first mode, when the transmission has been terminated.

17. The apparatus according to any of claims 10 - 16, wherein the controller (406, 424) is configured to switch the connection between the wireless device (302) and the host terminal (300) from the first mode to the second mode when the transmission range of the first mode is not sufficient.

18. The apparatus according to any of claims 10 - 17, wherein the first mode communication comprises communication in accordance with ultra low power Bluetooth radio technology and the second mode communication comprises communication in accordance with Bluetooth radio technology.

19. The apparatus according to any of claims 10 - 17, wherein the first mode communication comprises communication in accordance with a low power radio technology and the second mode communication comprises communication in accordance with a wireless local area network technology.

20. The apparatus according to any of claims 10 - 19, wherein the apparatus comprises one of a handsfree device, mobile device and a computer.
